# EUROPÄISCHE PATENTSCHRIFT

(11) **EP 1 285 788 B1**
(45) Veröffentlichungstag und Bekanntmachung des Hinweises auf die Patenterteilung: **15.02.2006**
(21) Anmeldenummer: 02017170.8
(22) Anmeldetag: 31.07.2002
(51) Int. Cl.: B60H 1/32, B60H 1/00

(54) **Klimaanlage**
Air conditioning device
Dispositif de climatisation

(30) Priorität: 16.08.2001 DE 10140311
(43) Veröffentlichungstag der Anmeldung: 26.02.2003
(73) Patentinhaber: Behr GmbH & Co. KG, 70469 Stuttgart (DE)
(72) Erfinder: Baruschke, Wilhelm, Dipl.-Ing., 73117 Wangen (DE); Morgenstern, Stefan, Dipl.-Ing (FH), 70499 Stuttgart (DE); Taxis-Reischl, Brigitte, Dr.-Ing., 70499 Stuttgart (DE)

(56) Entgegenhaltungen:
- US-A- 4 383 574
- US-A- 5 700 191
- US-B1- 6 212 900

## Beschreibung

Die Erfindung betrifft eine Klimaanlage, insbesondere in einem Kraftfahrzeug, mit einem zur Erzeugung von Kaltluft vorgesehenen, in einem Kältemittelkreislauf vor einem Kompressor angeordneten Verdampfer, einem zur Erzeugung von Warmluft vorgesehenen Heizwärmetauscher, einem manuell bzw. willkürlich betätigbaren Temperatursteller, einer damit gekoppelten Mischklappen- und/oder Steuerventilanordnung, die den Heizwärmetauscher steuerbar mit einer Wärmequelle, insbesondere dem Kühlwasserkreislauf eines Fahrzeugmotors, verbindet und/oder einen steuerbaren Anteil einer vom Verdampfer kommenden Luftströmung am Heizwärmetauscher vorbeileitet.

Derartige Klimaanlagen sind als serienmäßige Ausstattung oder Sonderausstattung von Kraftfahrzeugen bekannt. Neben einer Beheizung bzw. Kühlung des Fahrzeuginnenraumes bieten derartige Anlagen weitere Vorteile. Insbesondere kann die dem Fahrzeuginnenraum zugeführte Luft getrocknet werden, da in der Luft mitgeführter Wasserdampf am Verdampfer kondensiert.

Bekannte Klima-Automatik-Anlagen sind in der Regel mit umfangreicher Sensorik und Aktuatorik ausgerüstet, um einen hohen Bedienungskomfort zu ermöglichen und die Anlage bei allen von den Insassen des Fahrzeuges vorgenommenen Temperatureinstellungen für den Innenraum automatisch optimal zu betreiben. Hierzu kann auf die DE 37 24 430 C2 verwiesen werden.

Bei derartigen Anlagen sind jedoch der konstruktive Aufwand sowie die Herstellungskosten aufgrund der Sensorik sowie der Aktuatorik unerwünscht hoch.

Soweit bei Klimaanlagen in Kombination mit einem extern geregelten Kompressor auf automatisierte Sensorik und Aktuatorik weitestgehend verzichtet wird, wird die Bedienung der Anlage schwierig bzw. intuitiv uneinsichtig.

Im US-Patent US 6, 212, 900 B1 wird eine Klimaanlage beschrieben, mit
einem zur Erzeugung von Kaltluft vorgesehenen, in einem Kältemittelkreislauf vor einem Kompressor angeordneten Verdampfer,
einem zur Erzeugung von Warmluft vorgesehenen Heizwärmetauscher,
einem willkürlich bzw. manuell betätigbaren Temperatursteller,
einer damit gekoppelten Mischklappen- bzw. Steuerventilanordnung, die den Heizwärmetauscher steuerbar mit einer Heizquelle, insbesondere mit dem Kühlwasserkreislauf eines Fahrzeugmotors, verbindet bzw. einen steuerbaren Anteil einer vom Verdampfer kommenden Luftströmung am Heizwärmetauscher vorbeileitet, und
einer selbsttätigen Regelung der Temperatur des Verdampfers in Abhängigkeit von einer Lufttemperatur.

Deshalb ist es Aufgabe der Erfindung, eine konstruktiv einfache und gleichwohl leicht und intuitiv richtig bedienbare Klimaanlagen zu schaffen.

Diese Aufgabe wird bei einer Klimaanlage der eingangs angegebenen Art dadurch gelöst, daß die Kompressorleistung bei Minimal-Einstellung des Temperaturstellers zur Erreichung bzw. Aufrechterhaltung einer vorgegebenen niedrigen Verdampfertemperatur, z.B. 2°C, und bei von der Minimal-Einstellung abweichender Einstellung des Temperaturstellers zur Erreichung bzw. Aufrechterhaltung einer erhöhten Verdampfertemperatur eingeregelt wird bzw. einregelbar ist.

Die Erfindung beruht auf dem allgemeinen Gedanken, die Verdampfertemperatur bei "normalen" Einstellungen des Temperaturstellers in der Regel auf einem erhöhten Wert zu halten. Auf diese Weise läßt sich Energie einsparen, weil die Abkühleistung geringer ist. Dabei wird gleichzeitig der Vorteil einer intuitiv einsehbaren Bedienung gewährt. Denn die gewünschte Innenraumtemperatur kann in einfacher Weise durch entsprechende Betätigung des Temperaturstellers und/oder eines zweckmäßigerweise vorhandenen steuerbaren Gebläses, mit dem sich die vom Verdampfer kommende Luftströmung variieren läßt, gesteuert bzw. eingestellt werden.

Des weiteren wird die vorteilhafte Möglichkeit geboten, daß die Kälteleistung der Verdampfers bei Verstellung des Temperaturstellers sprunghaft ansteigt, wenn die minimal mögliche Luftaustrittstemperatur für die Luft aus dem Verdampfer eingestellt wird. Diese Einstellung ist vorzugsweise verrastbar.

Um eine weitergehende Energieeinsparung zu ermöglichen, kann gemäß einer bevorzugten Ausführungsform vorgesehen sein, bei zunehmender Außenlufttemperatur für die Verdampfertemperatur einen zunehmenden Sollwert vorzusehen.

Damit kann die Klimaanlage einerseits mit relativ geringer Kälteleistung arbeiten. Andererseits wird gegenüber der Außenlufttemperatur eine fühlbare Absenkung der Innenraumtemperatur gewährleistet, da die Verdampfertemperatur ständig deutlich unterhalb der Außenlufttemperatur bleibt.

Um bei extrem hohen Außenlufttemperaturen eine in diesem Fall wünschenswerte erhöhte Kälteleistung zu ermöglichen, kann der Sollwert für die Verdampfertemperatur bei extremen Außenlufttemperaturen in vorgegebener Weise abgesenkt werden, ggf. bis auf die vorgegebene niedrige Verdampfertemperatur.

Im übrigen wird hinsichtlich bevorzugter Merkmale der Erfindung auf die Ansprüche sowie die nachfolgend Erläuterung der Zeichnung verwiesen, anhand der besonders zweckmäßige Ausführungsformen der Erfindung näher beschrieben werden.

Dabei zeigt
- **Fig. 1**: eine schaltplanartig schematisierte Gesamtdarstellung einer erfindungsgemäßen Klimaanlage,
- **Fig. 2**: eine bezüglich der Erwärmung der Zuluft für den zu klimatisierenden Innenraum abgewandelte Ausführungsform,
- **Fig. 3**: ein Diagramm, welches den Sollwert der Verdampfertemperatur in Abhängigkeit von der Außenlufttemperatur für eine erste Ausführungsform zeigt,
- **Fig. 4**: ein entsprechendes Diagramm für eine abgewandelte Ausführungsform und
- **Fig. 5**: ein Diagramm der vorgenannten Art für eine nochmals abgewandelte Ausführung der Erfindung.

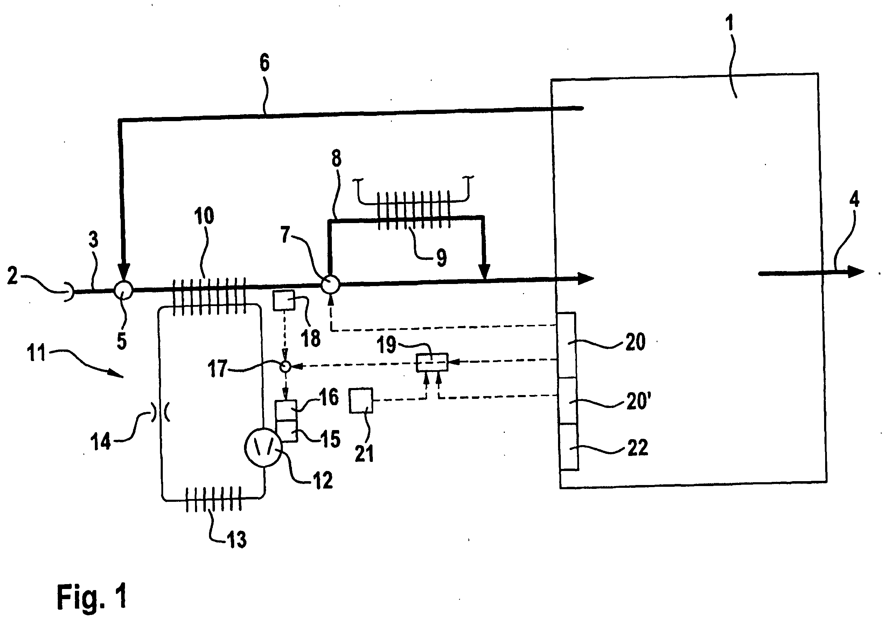

Gemäß Fig. 1 besitzt ein nicht näher dargestelltes Kraftfahrzeug einen zu klimatisierenden Innenraum 1. Diesem kann über einen Zulufteingang 2 sowie eine daran anschließende Lüftungsleitung 3 Luft zugeführt werden. Um den möglichen Luftaustausch im Innenraum zu erhöhen, ist eine nach außen führende Abluftleitung 4 vorgesehen.

Die Lüftungsleitung 3 ist über eine Umluftklappenanordnung 5 mit einer Umluftleitung 6 verbunden, so daß je nach Stellung der Umluftklappenanordnung nur Außenluft oder nur aus dem Innenraum 1 über die Umluftleitung 6 abgeführte Luft bzw. eine Mischung aus Außenluft und abgeführter Luft zugeführt werden kann.

Mittels einer Mischklappenanordnung 7 kann ein steuerbarer Anteil der zur Mischklappenanordnung 7 strömenden Luft in eine Heizleitung 8 eingeführt werden, die mit einem Heizwärmetauscher 9 versehen ist, welcher beispielsweise in bekannter Weise im Kühlkreislauf des Fahrzeugmotors angeordnet sein kann. Damit läßt sich die dem Innenraum 1 zugeführte Luft ggf. steuerbar erwärmen.

In Strömungsrichtung der Luft vor der Mischklappenanordnung 7 ist der Verdampfer 10 einer Klimaanlage 11 angeordnet, die in bekannter Weise einen über den Verdampfer 10 führenden Kältemittelkreislauf mit Kompressor 12, Kondensator 13 und Expansionsventil 14 aufweist, wobei der Kompressor 12 über ein Regelventil 15 in seiner Leistung steuerbar ist ("variable displacement compressor").

Das Regelventil 15 ist als elektromagnetisches Ventil ausgebildet und wird von einer Treiberstufe 16 gesteuert, die ihrerseits von einem Regler 17 gesteuert wird. Der Regler 17 erhält von einem Sensor 18 ein die Ist-Temperatur Tᵥ des Verdampfers 10 wiedergebendes Signal eines Temperatursensors 18. Außerdem erhält der Regler 17 von einem Sollwertgeber 19 ein die Soll-Temperatur Tₛₒₗₗ wiedergebendes Signal. Somit steuert der Regler 17 die Treiberstufe 16 entsprechend einem Soll-Istwert-Vergleich der Soll- bzw. Ist-Temperaturen nach dem Verdampfer 10.

Der Sollwertgeber 19 ist mit einem fahrerseitig einstellbaren Temperatursteller 20 verbunden, der seinerseits auch mit der Mischklappenanordnung 7 gekoppelt ist, d.h. durch Verstellung des Temperaturstellers 20 können sowohl die Signale des Sollwertgebers 19 als auch die Stellung der Mischklappenanordnung 7 verändert werden, wie weiter unten näher beschrieben wird.

Ggf. kann der Sollwertgeber 19 noch mit einem Temperatursensor 21 zur Erfassung der Außenlufttemperatur T_{A} verbunden sein, um eine Veränderung des Sollwertes Tₛₒₗₗ der Verdampfertemperatur auch in Abhängigkeit von der Außenlufttemperatur zu ermöglichen.

Durch einen Ein-Aus-Schalter 22 kann die Klimaanlage 11 bzw. deren Kältekreislauf ein- bzw. ausgeschaltet werden.

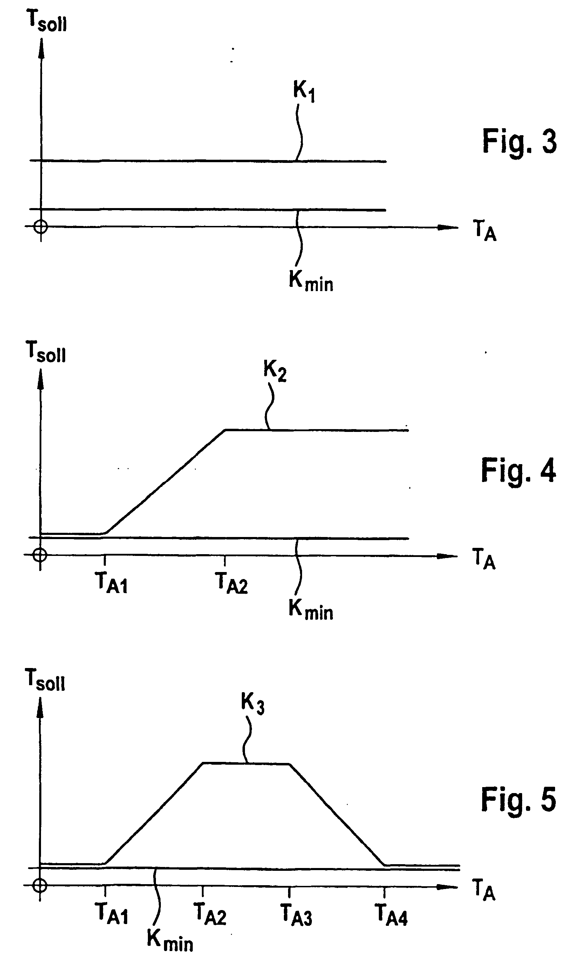

Die Funktion der Klimaanlage sowie ihrer Steuerung wird nachfolgend anhand der Fig. 3 erläutert. Diese zeigt ein Diagramm, welches die Solltemperatur Tₛₒₗₗ des Verdampfers in Abhängigkeit von der Außenlufttemperatur T_{A} wiedergibt.

Wenn der Temperatursteller 20 in eine vorzugsweise verrastete Einstellung für minimale Temperatur im Innenraum 1 eingestellt wird, nimmt die Mischklappenanordnung 7 ihre eine Endlage ein, in der die Heizleitung 8 abgesperrt ist und dementsprechend die gesamte Zuluft, welche zuvor über den Verdampfer 10 geströmt ist, vom Heizwärmetauscher 9 ferngehalten und direkt dem Innenraum 1 zugeleitet wird. Gleichzeitig wird für die Verdampfertemperatur gemäß der Kurve Kₘᵢₙ ein sehr niedriger Sollwert von beispielsweise 2°C vorgegeben, und zwar unabhängig von der jeweiligen Außenlufttemperatur T_{A}, welche bei dieser Ausführungsform sensorisch nicht erfaßt bzw. nicht für die Vorgabe der Sollwerttemperatur berücksichtigt wird.

Sobald der Temperatursteller 20 aus der vorgenannten, vorzugsweise verrasteten Einstellung für minimale Innenraumtemperatur auf eine der Minimal-Einstellung benachbarte Stellung gebracht wird, bleibt die Einstellung der Mischklappenanordnung 7 noch unverändert, d.h. der Eingang der Heizluftleitung bleibt verschlossen. Jedoch wird nunmehr für die Verdampfertemperatur gemäß der Kurve K₁ ein erhöhter Sollwert von beispielsweise 7°C vorgegeben, und zwar wiederum völlig unabhängig von der jeweiligen Außentemperatur.

Wird nun der Temperatursteller 20 zu höheren Innenraumtemperaturen hin verstellt, bleibt der vorgegebene Sollwert für die Verdampfertemperatur unverändert bei dem erhöhten Wert gemäß Kurve K₁. Jedoch wird die Mischklappenanordnung 7 zunehmend verstellt, derart, daß ein zunehmender Anteil der vom Verdampfer 10 kommenden Zuluft durch die Heizleitung 8 über den Heizwärmetauscher 9 geführt wird und insgesamt mehr oder weniger stark erwärmte Luft in den Innenraum 1 strömt.

Ggf. kann der Temperatursteller 20 eine Defroster-Taste 20' aufweisen. Wird diese betätigt, wird für die Verdampfertemperatur unabhängig von der übrigen Einstellung des Temperaturstellers 20 und unabhängig von der jeweiligen Außentemperatur T_{A} gemäß der Kurve Kₘᵢₙ der niedrige Sollwert vorgegeben. Dadurch wird ein besonders hoher Trockungsgrad der Zuluft durch Kondensation der mitgeführten Feuchtigkeit am Verdampfer 10 erreicht. Gleichzeitig sollte der Temperatursteller 20 auf vergleichsweise hohe Innenraumtemperatur eingestellt werden, um nachfolgend einen hohen Anteil der Zuluft über den Heizwärmetauscher 9 zu führen und damit den relativen Feuchtegrad (Verhältnis des tatsächlichen Feuchtegehaltes der Luft zum Feuchtegehalt bei Sättigung der Luft mit Feuchtigkeit) zu erreichen.

Auch wenn ein nicht dargestellter Umluftsteller betätigt wird, kann für die Verdampfertemperatur unabhängig von der Einstellung des Temperaturstellers 20 der niedrige Sollwert vorgegeben werden. Zusätzlich stellt der Umluftsteller die Umluftklappenanordnung 5 auf Umluftbetrieb.

Gemäß einer bevorzugten Ausführungsform kann auch eine abgewandelte Betriebsweise vorgesehen sein, die nachfolgend anhand der Fig. 4 erläutert wird.

Für den Fall, daß der Temperatursteller 20 auf die vorzugsweise verrastete Stellung für minimale Innenraumtemperatur eingestellt oder die Defroster-Taste betätigt wird, bleibt die Betriebsweise gegenüber der vorangehend dargestellten Ausführungsform unverändert, d.h. die Solltemperatur des Verdampfers 10 wird gemäß Kurve Kₘᵢₙ auf den niedrigen Sollwert eingestellt, und zwar unabhängig von der jeweiligen Außenlufttemperatur T_{A}. Auch bei Betätigung der Defroster-Taste 20' oder des Umluftstellers erfolgt der Betrieb in der vorangehend beschriebenen Weise.

Wenn jedoch bei nicht betätigter Defroster-Taste und nicht betätigtem Unluftsteller der Temperatursteller 20 auf erhöhte Werte gestellt wird, wird für die Solltemperatur des Verdampfers ein Wert gemäß der Kurve K₂ vorgegeben, der von der Außentemperatur T_{A} abhängig ist, derart, daß bei Überschreitung der Außentemperatur T_{A1} ein gegenüber dem niedrigen Sollwert zunehmend höherer Sollwert für die Verdampfertemperatur vorgegeben wird, bis oberhalb einer Außentemperatur T_{A2} ein von der Außentemperatur T_{A} unabhängiger, deutlich erhöhter Sollwert für die Verdampfertemperatur vorgegeben wird.

Gemäß der Fig. 5 kann bei einer Ausführungsform der Erfindung vorgesehen sein, daß der Sollwert für die Verdampfertemperatur bei Überschreitung einer Außenlufttemperatur T_{A3} wieder abgesenkt wird, bis oberhalb einer Außenlufttemperatur T_{A4} wiederum der niedrige Sollwert für die Verdampfertemperatur vorgegeben wird.

Bei den beiden zuletzt beschriebenen Ausführungsformen ist der Temperatursensor 21 für die Außenlufttemperatur notwendig, um mit dem Sollwertgeber 19 die von der Außenlufttemperatur abhängige Einstellung des Sollwertes der Verdampfertemperatur vornehmen zu können.

Die Ausführungsformen nach den Fig. 4 und 5 bieten im Vergleich zur Ausführungsform der Fig. 3 eine besonders sichere Entfeuchtung des klimatisierten Innenraumes sowie ein höheres Energie- bzw. Kraftstoff-Einsparpotential. Die Ausführungsform der Fig. 3 bietet einen vergleichsweise hohen Bedienungskomfort.

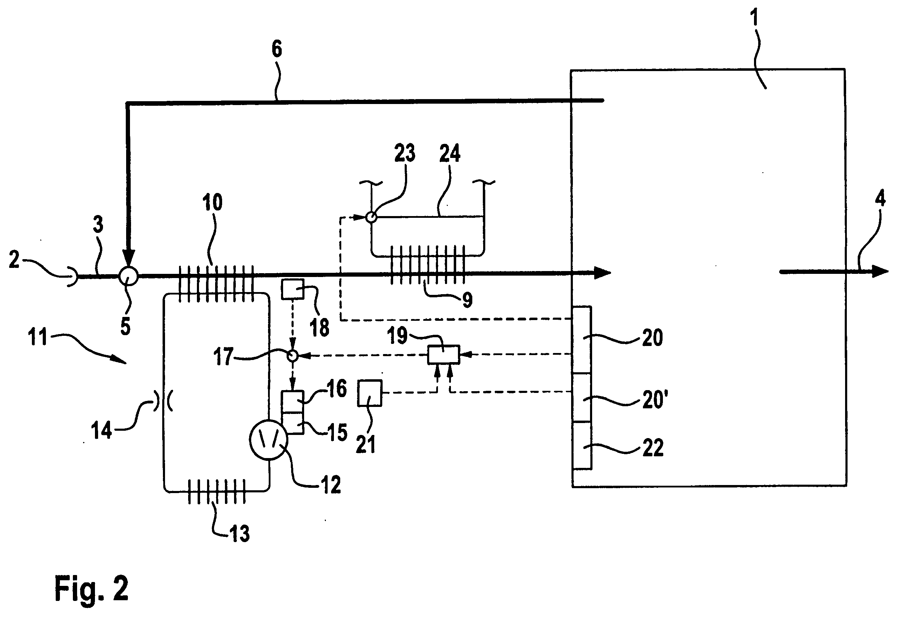

Gemäß Fig. 2 kann abweichend von der Ausführungsform der Fig. 1 vorgesehen sein, die vom Verdampfer 10 kommende Luft ständig über den an der weiteren Lüftungsleitung 3 angeordneten Heizwärmetauscher 9 zu leiten und diesen über ein Steuerventil 23 steuerbar mit dem Kühlkreislauf des Fahrzeugmotors zu verbinden bzw. von diesem Kühlkreislauf abzusperren. Im dargestellten Beispiel bildet das Steuerventil 23 ein steuerbares Bypass-Ventil, mit dem vom Motor kommendes heißes Kühlwasser beliebig auf eine Bypass-Leitung 24 bzw. die durch den Heizwärmetauscher 9 führende Leitung aufgeteilt werden kann.

Durch den Temperatursteller 20 wird das Steuerventil 23 in gleicher Weise gesteuert, wie es oben für die Steuerung der Mischklappenanordnung 7 beschrieben wurde.

In der Lüftungsleitung 3 ist vorzugsweise ein nicht dargestelltes steuerbares Gebläse angeordnet, um den Luftdurchsatz variieren zu können.

### Bezugszeichenliste

- 1: Innenraum
- 2: Zulufteingang
- 3: Lüftungsleitung
- 4: Abluftleitung
- 5: Umluftklappenanordnung
- 6: Umluftleitung
- 7: Mischklappenanordnung
- 8: Heizleitung
- 9: Heizwärmetauscher
- 10: Verdampfer
- 11: Klimaanlage
- 12: Kompressor
- 13: Kondensator
- 14: Expansionsventil
- 15: Regelventil des Kompressors
- 16: Treiberstufe
- 17: Regler
- 18: Sensor
- 19: Sollwertgeber
- 20: Temperatursteller
- 20': Defroster-Taste
- 21: Temperatursensor
- 22: Klima-Ein-Aus-Schalter
- 23: Steuerventil
- 24: Bypass-Leitung

## Patentansprüche

1. Klimaanlage, insbesondere in einem Kraftfahrzeug, mit
- einem zur Erzeugung von Kaltluft vorgesehenen, in einem Kältemittelkreislauf vor einem Kompressor (12) angeordneten Verdampfer (10),
- einem zur Erzeugung von Warmluft vorgesehenen Heizwärmetauscher (9),
- einem willkürlich bzw. manuell betätigbaren Temperatursteller (20),
- einer damit gekoppelten Mischklappen- bzw. Steuerventilanordnung (7,23), die den Heizwärmetauscher (9) steuerbar mit einer Heizquelle, insbesondere mit dem Kühlwasserkreislauf eines Fahrzeugmotors, verbindet bzw. einen steuerbaren Anteil einer vom Verdampfer (10) kommenden Luftströmung am Heizwärmetauscher (9) vorbeileitet, und
- einer selbsttätigen Regelung der Temperatur des Verdampfers (10), **dadurch gekennzeichnet, dass** die Kompressorleistung bei Minimal-Einstellung des Temperaturstellers (20) zur Erreichung bzw. Aufrechterhaltung einer vorgegebenen niedrigen Verdampfertemperatur und bei von der Minimal-Einstellung abweichender Einstellung des Temperaturstellers (20) zur Erreichung bzw. Aufrechterhaltung einer erhöhten Verdampfertemperatur eingeregelt wird bzw. einregelbar ist.

2. Klimaanlage nach Anspruch 1,
**dadurch gekennzeichnet,**
**daß** die Minimal-Einstellung verrastbar ist.

3. Klimaanlage nach Anspruch 1 oder 2,
**dadurch gekennzeichnet,**
**daß** die Verdampfertemperatur als Führungsgröße zur Regelung der Kompressorleistung herangezogen wird.

4. Klimaanlage nach Anspruch 3,
**dadurch gekennzeichnet,**
**daß** ein Sensor (18) für die Verdampfertemperatur vorhanden ist.

5. Klimaanlage nach Anspruch 1 oder 2,
**dadurch gekennzeichnet,**
**daß** ein mit der Verdampfertemperatur korrelierter Parameter als Führungsgröße zur Regelung der Kompressorleistung herangezogen wird.

6. Klimaanlage nach einem der Ansprüche 1 bis 4,
**dadurch gekennzeichnet,**
**daß** außerhalb der Minimal-Einstellung des Temperaturstellers (20) für die Verdampfertemperatur ein von der Außentemperatur abhängiger Soll-Wert vorgegeben wird.

7. Klimaanlage nach Anspruch 6,
**dadurch gekennzeichnet,**
**daß** der Sollwert mit zunehmender Außentemperatur ansteigt.

8. Klimaanlage nach Anspruch 6 oder 7,
**dadurch gekennzeichnet,**
**daß** für den Sollwert ein Maximalwert vorgegeben ist.

9. Klimaanlage nach einem der Ansprüche 6 bis 8,
**dadurch gekennzeichnet,**
**daß** oberhalb eines Schwellwertes der Außentemperatur (T_{A3}) der Sollwert gegenüber dem Maximalwert abgesenkt wird.

10. Klimaanlage nach Anspruch 9,
**dadurch gekennzeichnet,**
**daß** die Absenkung auf den niedrigen Sollwert begrenzt ist.

11. Klimaanlage nach einem der Ansprüche 1 bis 10,
**dadurch gekennzeichnet,**
**daß** bei einer Einstellung auf "Umluft" und/oder "Entfrostung" immer der niedrige Sollwert für die Verdampfertemperatur vorgegeben wird.

12. Klimaanlage nach einem der Ansprüche 1 bis 11,
**dadurch gekennzeichnet,**
**daß** zur Steuerung der Kompressorleistung ein steuerbares Regelventil (15) angeordnet ist.

## Claims

1. Air-conditioning system, in particular in a motor vehicle, comprising
- an evaporator (10) provided to generate cold air and arranged in a refrigerant circuit upstream from a compressor (12),
- a heat exchanger (9) provided to generate warm air,
- a temperature regulator (20) that can be actuated manually or at discretion,
- a mixing valve or control valve arrangement (7, 23) coupled thereto, which connects the heat exchanger (9) in a controllable manner to a heat source, in particular to the coolant circuit of a vehicle or guides a controllable fraction of an air flow coming from the evaporator (10) past the heat exchanger (9), and
- an automatic control of the temperature of the evaporator (10), **characterised**
**in that** the compressor output is adjusted or can be adjusted at minimum adjustment of the temperature regulator (20) to achieve or maintain a predetermined low evaporator temperature and, at an adjustment of the temperature regulator (20) differing from the minimum adjustment, is adjusted or can be adjusted to achieve or maintain an increased evaporator temperature.

2. Air-conditioning system according to claim 1, **characterised in that** the minimum adjustment can be locked.

3. Air-conditioning system according to claim 1 or 2, **characterised in that** the evaporator temperature is used as the guide variable to control the compressor output.

4. Air-conditioning system according to claim 3, **characterised in that** a sensor (18) is provided for the evaporator temperature.

5. Air-conditioning system according to claim 1 or 2, **characterised in that** a parameter correlated with the evaporator temperature is used as the guide variable to control the compressor output.

6. Air-conditioning system according to any one of claims 1 to 4, **characterised in that** outside the minimum adjustment of the temperature regulator (20) for the evaporator temperature, a desired value which is dependent on the outside temperature is preselected.

7. Air-conditioning system according to claim 6, **characterised in that** the desired value rises with increasing outside temperature.

8. Air-conditioning system according to claim 6 or 7, **characterised in that** a maximum value is preselected for the desired value.

9. Air-conditioning system according to any one of claims 6 to 8, **characterised in that** above a threshold value of the outside temperature (T_{A3}), the desired value is lowered relative to the maximum value.

10. Air-conditioning system according to claim 9, **characterised in that** the lowering is limited to the low desired value.

11. Air-conditioning system according to any one of claims 1 to 10, **characterised in that** the low desired value is always pre-selected for the evaporator temperature when there is an adjustment to "recirculation air" and/or "defrosting".

12. Air-conditioning system according to any one of claims 1 to 11, **characterised in that** a controllable control valve (15) is arranged to control the compressor output.

## Revendications

1. Dispositif de climatisation, en particulier dans une automobile, avec
un évaporateur (10) prévu pour la production d'air froid et disposé dans un circuit d'agent réfrigérant avant un compresseur (12),
un échangeur de chaleur (9) prévu pour la production d'air chaud,
un sélecteur de température (20) manoeuvrable de manière arbitraire ou manuelle,
un agencement de clapet de mélange ou selon le cas de soupape de commande, raccordé à celui-ci (7, 23), qui relie l'échangeur de chaleur (9) réglable à une source de chaleur, en particulier au circuit d'eau froide d'un moteur de véhicule ou une proportion réglable d'un courant d'air provenant de l'évaporateur (10) ou fait passer une proportion réglable d'un courant d'air sortant de l'évaporateur (10) sur l'échangeur de chaleur (9),
et un réglage automatique de la température de l'évaporateur (10), **caractérisé en ce que** la puissance du compresseur lors d'un réglage minimal du sélecteur de température (20) est réglée ou peut être réglée pour atteindre ou pour maintenir une température d'évaporation prédéterminée basse et lors d'un réglage différent du réglage minimal du sélecteur de température (20) pour atteindre ou pour maintenir une température d'évaporateur élevée.

2. Dispositif de climatisation selon la revendication 1 **caractérisé en ce que** le réglage minimum peut être enclenché.

3. Dispositif de climatisation selon la revendication 1 ou 2, **caractérisé en ce que** la température d'évaporation est utilisée comme grandeur de référence pour le réglage de la puissance du compresseur.

4. Dispositif de climatisation selon la revendication 3, **caractérisé en ce qu'**un capteur (18) est disponible pour la température de l'évaporateur.

5. Dispositif de climatisation selon la revendication 1 ou 2, **caractérisé en ce qu'**un paramètre associé à la température de vaporisation est utilisé comme grandeur de référence pour le réglage de la puissance du compresseur.

6. Dispositif de climatisation selon l'une des revendications 1 à 4, **caractérisé en ce qu'**en dehors du réglage minimal du sélecteur de température (20) pour la température de l'évaporateur, une valeur nominale dépendant de la température extérieure est prédéfinie.

7. Dispositif de climatisation selon la revendication 6, **caractérisé en ce que** la valeur nominale augmente lorsque la température extérieure augmente.

8. Dispositif de climatisation selon la revendication 6 ou 7, **caractérisé en ce qu'**une valeur maximale est prédéfinie pour la valeur nominale.

9. Dispositif de climatisation selon l'une des revendications 6 à 8, **caractérisé en ce qu'**au-dessus d'une valeur-seuil de la température extérieure (7), la valeur nominale est abaissée par rapport à la valeur maximale.

10. Dispositif de climatisation selon la revendication 9 **caractérisé en ce que** la baisse est limitée à la valeur nominale basse.

11. Dispositif de climatisation selon l'une des revendications 1 à 10, **caractérisé en ce que** lors d'un réglage sur "air de circulation" et/ou "dégivrage" la valeur nominale basse est toujours prédéfinie pour la température de l'évaporateur.

12. Dispositif de climatisation selon l'une des revendications 1 à 11 **caractérisé en ce qu'**une soupape de réglage (15) pouvant être commandée est installée pour la commande de la puissance du compresseur.
